# EUROPEAN PATENT APPLICATION

(11) **EP 0 647 517 A2**
(43) Date of publication of application: **12.04.1995**
(21) Application number: 94307304.9
(22) Date of filing: 05.10.1994
(51) Int. Cl.: B29C 49/48, B29C 33/00, A61J 9/00

(54) **Molding irregular objects**

(30) Priority: 06.10.1993 US 132608
(71) Applicant: JOHNSON & JOHNSON CONSUMER PRODUCTS, INC., Skillman, New Jersey 08558 (US)
(72) Inventor: Bice, Joseph R., Trenton, NJ 08638 (US)
(74) Representative: Fisher, Adrian John

(57) **Abstract**

This invention relates to molding irregular hollow thermoplastic objects having irregular shapes and particularly those having non-straight line centerlines. A mold is provided which comprises a cavity having. a shape of the object and being dividing into two half molds by non-planar interfacing parting surfaces containing such non-straight line centerline. The molds are adapted to be separated while maintaining the centerlines co-planar. Means are provided for inserting a parison between the open half-molds with the parison co-planar to the center lines and means are provided for closing the molds while maintaining this co-planar relationship. Accordingly, the parison may be inserted into the cavity without the need for manipulating the parison relative to the mold.

## Description

### BACKGROUND OF THE INVENTION

This invention relates to the molding of certain hollow thermoplastic objects having irregular shapes and in particular, such objects as bottles having curvilinear or angled center lines as contrasted with having straight-line center lines.

A particular application of this invention is directed toward molding baby bottles of the kind described in U.S. Patent 4,676,387. Such a bottle comprises two generally cylindrical sections each having an axis, the axes intersecting at an angle to each other resulting in a "bent" shape. The bent shape of the bottle is said to facilitate the feeding of the infant irrespective of the infant being in a reclined nursing position or in a sitting position.

The preferable method of molding such objects as baby bottles is the blow molding technique wherein a mold is provided having a cavity therein of the shape of the bottle. The mold is split into two parts through the cavity section which parts are separated to introduce there between a hallow molten tube of the thermoplastic material to be employed (such thermoplastic molten tube referred to in the art as a parison). The molded parts are brought together with the molten tube residing in the cavity. A blow pin is inserted into one end of the hollow tube and a gas is then introduced into the tube via the blow pin to expand the tube aqainst the walls of the cavity, whereby the tube takes the shape of the cavity. The mold is then opened and the object is subjected to further molding and finishing processes.

The above described method is generally employed in the production of bottles having straight-line center lines e.g., bottles which are essentially right cylinders, using conventionally designed molds. Unfortunately, as will be described herein, when it is desired to produce bottles having irregular shapes, conventional mold designs and molding techniques must be modified to accommodate the unusual shape of the object to be molded. Accordingly, there is a need for a design which is capable of facilitating the molding of irregular objects.

### SUMMARY OF THE INVENTION

In accordance with the teachings of this invention, a method and apparatus is provided for molding irregular hollow objects such as are exemplified herein by baby bottles. The certain irregular hollow objects encompassed within the scope of this invention are ones which have a centerline which centerline defines a unique plane. Thus, for example, a curvilinear centerline defines a single plane i.e., there is only one unique plane that can contain the entire centerline. A centerline comprising two axes which intersect at an angle, as in the baby bottle of U.S. Patent 4,676,387, defines a unique plane. On the other hand, a centerline of a right cylinder, such as that of the conventional baby bottles does not define a unique plane in that an infinite number of planes, rotating about such line, can contain such line. As used herein, a centerline with respect to such certain irregular objects is defined as a line which bisects i.e., divides into two parts, the planar figure projected by the object onto a plane perpendicular to the unique plane defined by the centerline.

With the above definitions in mind, the method of the invention may be broadly stated as a method for molding an object having a centerline which centerline defines a unique plane. Amold is provided having a cavity therein in the shape of the object and having a cavity centerline corresponding to the centerline of the object, the mold being divided by a non-planar surface passing through the cavity centerline into two half molds having interfacing non-planar parting surfaces containing the cavity centerline. The mold is movable into an open position with such parting surfaces spaced apart and is movable into a closed position with such surfaces interfacing. The mold is further characterized in that when the surfaces are spaced apart, the cavity centerline in each surface lies substantially in a common plane transverse to the parting surfaces. The molten tube of thermoplastic material, the parison, is introduced between the parting surfaces of the open mold with the axis of the parison also being in the common plane, i.e. the cavity center line in each parting surface of each half mold and the axis of the parison are all co-planar. Thereafter, the mold is closed and the molding process is completed e.g., a blowing pin is inserted and the parison is expanded to fill the mold, the molded object is removed, and finishing steps are performed on the molded object.

It will be appreciated that because the centerline is one which defines a unique plane, it follows that, in order to comply with the teachings of this invention, the parting surfaces, must of necessity, be non-planar. Thus for example where the centerline comprises the two intersecting axis of the "bent" baby bottle of U.S. Patent 4,676,387, such axes define a single plane. Each of the parting surfaces of the mold could then, within the teachings of this invention, be represented by two intersecting planes transversed to such single unique plane.

### BRIEF DESCRIPTION OF THE DRAWINGS

Figure 1 is an elevational view of an angular baby bottle illustrating an irregular object, the molding of which is the subject of this invention;
Figure 2 is a perspective view of a conventional apparatus for molding such an irregular object as the angular baby bottle, shown with the mold in the open position and the parison inserted between half-molds;
Figure 3 is a perspective view of the conventional apparatus of Figure 2, shown with the mold in the closed position;
Figure 4 is a perspective view of the apparatus of this invention for molding the same baby bottle as is illustrated in Figure 3 and 4, shown with the mold in the open position and the parison inserted between half-molds; and
Figure 5 is perspective view of the apparatus of this invention shown with the mold in the closed position.

### DETAILED DESCRIPTION OF THE INVENTION

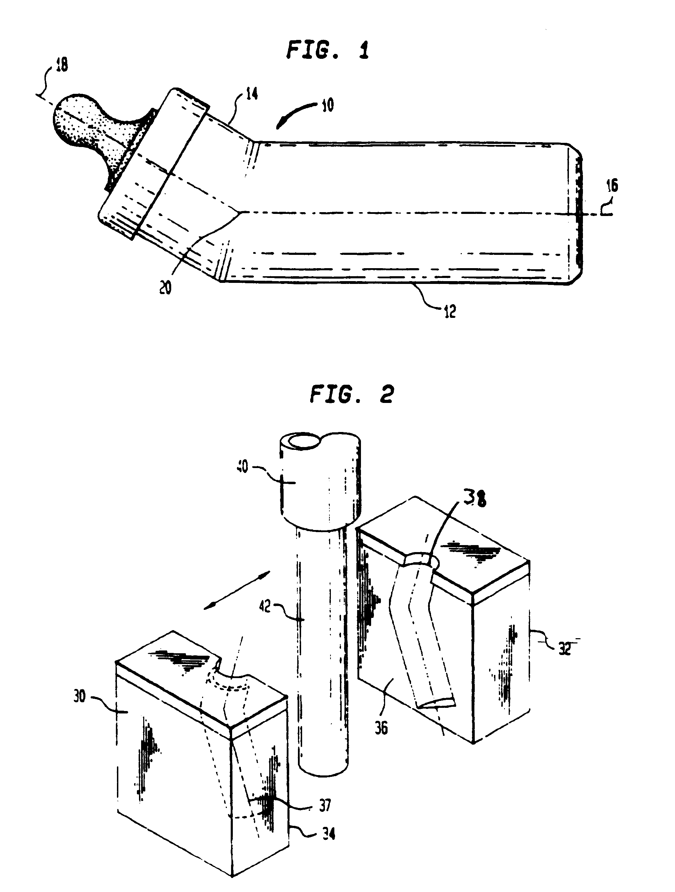

Referring now to the drawings, this invention relates to the molding of certain irregular objects as exemplified by the angular baby bottle illustrated in Figure 1. This bottle 10 comprises essentially two hollow right cylindrical section; a top section 14 and a bottom section 12, which meet at an angle to give the bottle a "bent" configuration. The centerline of the bottle is comprised of the axis 18 of the top section 14 and axis 16 of the bottom section 12; said axes intersecting at point 20. As will be appreciated the centerline can be wholly contained in only a single unique plane, i.e. the plane parallel to the plane of the Figure 1 and passing through the centerline. As will also be appreciated, the projection of Figure 1, projected onto another plane which is perpendicular to the singular unique plane wholly containing the centerline, will be bisected by the centerline.

Referring now to Figure 2, illustrated therein is a conventional apparatus for molding the bottle of Figure 1. As can be seen from the figure, the mold comprises two separable half-molds 30,32 each having in contrast to the teaching herein, a parting surface 34, 36, respectively, which is planar. Each of the half molds 30, 32 contain a half of the cavity 38 which, when the half molds are in the closed position, takes the shape of the bottle 10 to be molded.

An extruder head 40 is provided to extrude the molten tube of thermoplastic material 42 known in the art as a parison. The extruder head 40 is positioned such that the parison will be extruded between the open half molds and then can be inserted into the cavity and blown into the desired shape.

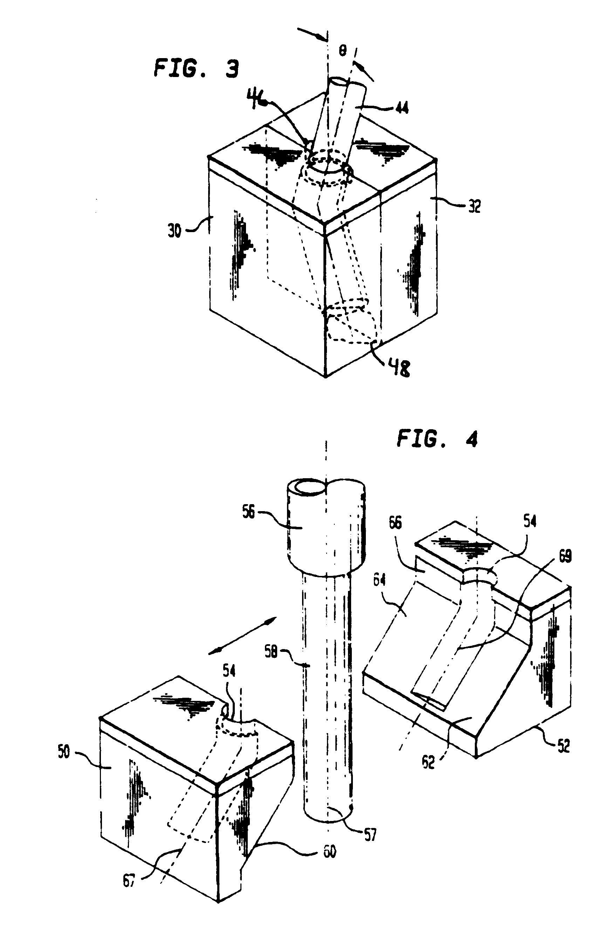

Referring now to Figure 3, shown therein is the mold in the closed position with the parison now inserted into the cavity. A blow pin 44 is inserted into the parison to expand it to take the shape of the cavity. After such expansion, the mold is opened, the solidified bottle removed and finishing steps such as the removal of neck flash 46 and bottom flash 48 are performed.

As can be seen from Figure 3, because of the irregular shape of the centerline of the bottle and the use of the conventional planar parting surface molds, the axis of the parison must be curved to fit the cavity. This can be accomplished by several methods such as rotating the mold with respect to the parison or rotating the extruder head with respect to the mold or some combination of these methods. In whatever manner this is accomplished, it is essential that the parison be captured within the cavity and so substantial manipulation is required. While inconvenient, in the case of a mold containing a single cavity, the manipulation may be tolerable, although production rates will be severely affected. On the other hand, when it is desired to employ molds having multiple cavities for producing multiple objects, as is common for example in the production of right cylinder bottles, the need to manipulate multiple parisons into the correct position has heretofore been an insurmountable obstacle in designing an operable system.

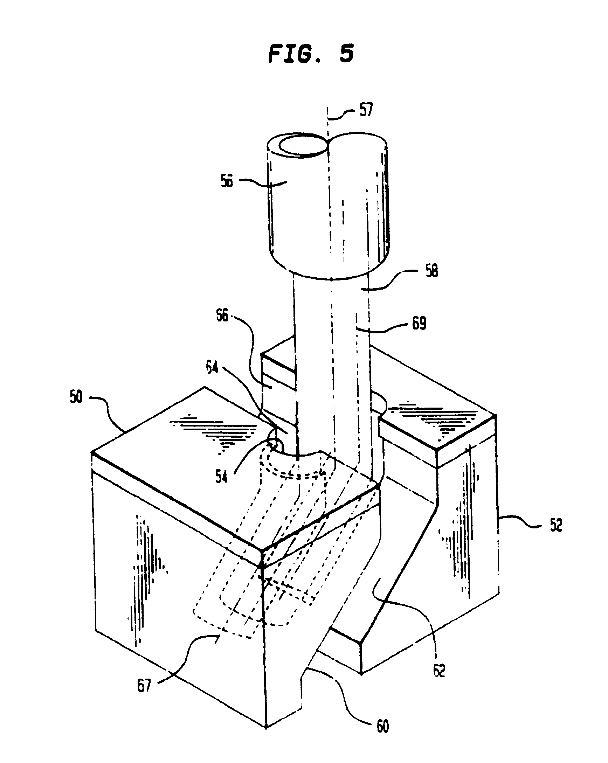

Referring now to Figures 4 and 5, illustrated therein is an apparatus which, in accordance with the teachings of this invention, can produce the same angled bottle without the need for manipulation of the parison relative to the mold.

Referring specifically to Figure 4, the mold of this invention again comprises two separable half molds 50, 52 each containing a half of the cavity 54 which, when the half molds are in the closed position, takes the shape of the bottle to be molded. Again, extruder head 56 is positioned to deliver parison 58 between the open half molds for insertion into cavity 54 when the molds are closed.

In contrast to the mold of Figures 2 and 3 and in accordance with the teachings of this invention, the parting surfaces 60, 62 of the half molds 50, 52, respectively, are not planar but instead are non-planar. In the specific embodiment shown in the figures, these surfaces each comprise two intersecting planes e.g., surface 62 comprises the two intersecting planes 64 and 66. The parting surfaces are further designed so as to include the entire cavity centerline within such surface. Thus for example, cavity centerline 69 is totally on the surface 62 and cavity centerline 67 is totally on the surface 60; Further, in accordance with the teachings of the invention, the two half molds are aligned with respect to each other such that the cavity centerline of each of the half cavities are co-planar. That is to say, in the proper alignment, each of the unique planes defined by each of the centerlines is the same common plane. Further still, in accordance with this invention the extruder head and the parison are positioned such that the axis 57 of the parison 58 is also co-planar with the two centerlines, i.e., the axis of the parison, and each of the cavity centerlines all lie in a common plane, transverse to the parting surfaces.

Referring to Figure 5, illustrated there is the mold of Figure 4, in a partially closed position. As can be seen from the Figure because of the co-planar nature of the cavity centerlines and the parison axis, which in turn is made possible by the unique non-planar parting surface design of the mold, the problems associated with the conventional mold illustrated in Figures 2 and 3 are obviated. Instead, there is no need to manipulate the parison into position relative to the mold. By simply urging the two parting surfaces together while maintaining the co-planar relationship, the parison automatically assumes the proper position in the cavity.

It will be understood that techniques and apparatus for mounting, guiding and moving the mold halves are well known in the art and are not a part of this invention. For example, the half molds may be mounted on rails, bars or tracks and maintain thereby the desired orientation and alignment during the opening and closing process. Additional means may be provided for maintaining the mold in alignment when closed; such means comprising pins and bushings mating to hold the half molds in place.

The techniques of blow molding and the construction of and materials employed in making molds in general are all well known to those skilled in the art and are equally applicable to this invention. Reference is made, in this connection to "Plastic Blow Molding Handbook;" Norman L. Lee, Editor; Chapter 23, pp. 489-512; Extrusion Blow Molds; published by Van Nostrand Reinhold, 1990. Furthermore, materials useful for forming objects such as bottles are also well known. Specifically such thermoplastic materials as high density polyethylene, polypropylene, polyvinylchloride, may be employed. A preferable material is the polycarbonates i.e., polymers formed by the condensation of polyphenols such as Bisphenol-A with phosgene. A polycarbonate of choice is one obtained from the General Electric Company and sold by them under the tradename Lexan.

## Claims

1. A method for molding an object having a centerline which defines a unique plane comprising the steps of:
providing a mold having a cavity therein in the shape of the object; said cavity having a cavity centerline also defining a unique plane and said mold comprising two half molds, divided by non-planar interfacing parting surfaces containing said cavity centerline;
positioning said half mold in an open position with the parting surfaces facing each other and spaced apart and with the cavity centerlines of each half mold aligned to be substantially co-planar;
position a parison having a longitudinal axis between the half molds with the axis of the parison also substantially co-planar to the cavity centerlines; and
closing said half-molds so that the parting surfaces interface while maintaining the substantially co-planar relationship of the cavity centerlines and the parison axis.

2. The method of claim 1 wherein the object has a curvilinear centerline, and the parting surfaces are curvilinear.

3. The method of claim 1 wherein the object comprises two right cylinders meeting at an angle and the centerline comprises the intersecting axes of said right cylinders.

4. The method of claim 3 wherein the parting surfaces each comprise two intersecting planes each plane containing one of said intersecting axes.

5. The method of claim 1 wherein said parison comprises a polycarbonate thermoplastic material and said object is a baby bottle.

6. A mold for producing an object having a centerline which defines a unique plane, said mold comprising:
walls, defining a cavity in the shape of the object, said cavity having a cavity centerline also defining a unique plane;
said mold comprising two half molds, divided by non-planar interfacing parting surfaces each containing said cavity centerline;
means for spacing said half molds apart into an open position whereby said parting surfaces face each other and said cavity centerlines are co-planar;
means for providing a parison having an axis between said half molds with the axis with the axis of the parison co-planar with the cavity centerlines; and
means for closing said half-molds about said parison while maintaining the co-planar relationship of said cavity centerlines and said axis of the parison.

7. The mold of claim 6 for molding an object having a curvilinear centerline wherein the parting surfaces are curvilinear.

8. The mold of claim 6 for molding an object comprising two right cylinders meeting at an angle and having a centerline comprising the intersecting axes of said right cylinders wherein the non-planar parting surfaces each comprise two intersecting planes, each containing one of said intersecting axes.

9. The mold of claim 1 for molding a baby bottle.
